Europäisches Patentamt

European Patent Office

Office européen des brevets

(11) Numéro de publication: **0 402 254**

**A1**

## (12) DEMANDE DE BREVET EUROPEEN

(21) Numéro de dépôt: **90401547.6**

(22) Date de dépôt: **07.06.90**

(51) Int. Cl.⁵: **B60J 10/02**

(30) Priorité: **09.06.89 FR 8907658**

(43) Date de publication de la demande:
**12.12.90 Bulletin 90/50**

(84) Etats contractants désignés:
**BE DE ES GB IT LU NL SE**

(71) Demandeur: **BOUSSOIS S.A.**
**126-130 rue Jules Guesde**
**F-92302 Levallois-Perret(FR)**

Demandeur: **SOCIETE LES ADHESIFS ET
INSONORISANTS MODERNES Société
Anonyme**
**82, Avenue du 85ème de Ligne, B.P. 71**
**F-58203 Cosne-Cours-sur-Loire Cédex(FR)**

(72) Inventeur: **Pagnucco, Gilbert**
**9, Allée des Eglantines**
**F-78310 Maurepas(FR)**
Inventeur: **Hochart, Paul**
**5 rue des Usines, La Longueville**
**F-59570 Bavay(FR)**
Inventeur: **Dechamps, Bruno**
**49 rue A. Baudin**
**F-58200 Cosne/Loire(FR)**

(74) Mandataire: **Bouju, André**
**Cabinet Bouju 38 avenue de la Grande
Armée**
**F-75017 Paris(FR)**

(54) **Vitrage à cordon de matière thermofusible apte à être collé par induction.**

(57) Le vitrage (1) comporte à sa périphérie un cordon (2) en matière thermofusible apte à permettre sa fixation par collage sur un châssis rigide (3), par chauffage par induction haute-fréquence.

Ce vitrage (1) porte en outre un élément inducteur (4) en métal bon conducteur de l'électricité qui s'étend sur toute la périphérie (1a) du vitrage, les extrémités de cet élément inducteur présentant des bornes destinées à être raccordées à un générateur de chauffage par haute-fréquence.

Utilisation pour augmenter la rapidité et diminuer le coût de la pose des vitrages, notamment des pare-brise.

FIG_1

EP 0 402 254 A1

## Vitrage à cordon en matière thermofusible apte à ête collé par chauffage par induction

La présente invention concerne un vitrage présentant sur sa périphérie un cordon en matière thermofusible permettant de coller ce vitrage sur un châssis rigide.

Les vitrages concernés par la présente invention sont notamment les pare-brise, les lunettes arrières et les vitres latérales d'automobiles devant être fixés sur la carrosserie en acier ou en matière plastique des automobiles.

Les demanderesses ont décrit dans divers brevets des vitrages prêts à la fixation par collage dans un cadre rigide tel que la carrosserie d'une automobile.

Ainsi, le brevet européen 81 426 décrit un vitrage muni à sa périphérie d'un cordon de colle thermofusible relié par un insert métallique à un joint de finition également fixé à la périphérie du vitrage et destiné à remplir l'espace compris entre le bord de ce vitrage et le cadre rigide sur lequel le vitrage doit être collé.

L'insert métallique est destiné à être relié à une source de courant électrique pour permettre un chauffage par effet Joule afin de ramollir le cordon de colle et obtenir le collage du vitrage sur le châssis.

Dans le vitrage décrit dans le brevet français 86 17818, l'insert métallique pour le chauffage par effet Joule est entièrement noyé dans le cordon de colle thermofusible qui est préformé de façon à assurer à la fois l'adhérence et la finition.

Dans le vitrage décrit dans le brevet français 2 615 558, l'insert métallique pour le chauffage par effet Joule est partiellement noyé dans un joint en matière plastique destiné à être fixé au châssis. Ce joint évite les débordements de colle provoqués lors de la fusion du cordon de collage.

Dans toutes ces réalisations, le ramollissement du cordon de colle thermofusible nécessaire pour réaliser la fixation du vitrage sur le châssis rigide tel que la carrosserie d'une automobile, est obtenu en chauffant par effet Joule l'insert métallique noyé partiellement ou totalement dans le cordon de colle.

Un tel chauffage par effet Joule présente toutefois les inconvénients suivants :
- la durée du chauffage est longue ; il faut en effet que la température de l'insert métallique soit suffisante pour que le cordon de collage fonde à sa surface en contact avec le châssis rigide,
- ce chauffage entraîne des débordements de colle qui sont inesthétiques ;
- le chauffage n'est pas uniforme sur toute la périphérie du vitrage, de sorte que l'on observe des endroits où la colle a été surchauffée et où elle a coulé et des endroits où elle n'a pas été suffisamment chauffée et dans lesquels elle n'adhère pas suffisamment.

Le procédé décrit dans la demande de brevet français 88 17061 du 23/12/1988 remédie aux inconvénients ci-dessus.

Selon ce procédé, lors du chauffage, le cordon de collage est dans sa zone adjacente au cadre rigide, en contact avec un matériau magnétique et on chauffe ledit matériau magnétique par induction haute fréquence, au moyen d'un dispositif de chauffage par induction appliqué sur la périphérie du vitrage au droit du cordon de collage et du matériau magnétique.

Le dispositif de chauffage par induction chauffe uniquement le matériau magnétique qui, à son tour, chauffe le cordon de collage dans sa zone adjacente au cadre rigide, c'est-à-dire précisément dans la zone à coller.

Ce chauffage par induction est très rapide, puisque localisé uniquement dans la zone à coller. Il permet ainsi de coller un pare-brise ou une lunette arrière d'automobile en un temps très court (inférieur à une minute), ce qui permet un gain de temps considérable de montage sur une chaîne de fabrication en série.

Etant donné que ce chauffage par induction est très localisé et uniforme, les risques de surchauffe, de coulage et de carbonisation de la colle sont évités.

Par ailleurs, ce chauffage par induction permet de coller des vitrages à la fois sur des cadres métalliques ou sur des cadres en matière plastique et ce quelle que soit la forme de la surface de collage.

Ainsi, lorsque le cadre est en acier, ce qui est souvent le cas dans une automobile, le collage est réalisé par chauffage par induction de ce cadre en acier lui-même puisque cet acier est magnétique.

Etant donné que seul ce cadre en acier est chauffé par induction, on obtient une fusion locale du cordon de collage à sa surface en contact avec le cadre, ce qui permet d'obtenir en un temps très court un collage parfaitement uniforme. En l'absence d'insert métallique noyé dans le cordon, un tel cordon ne pourrait être fixé par chauffage par effet Joule. D'autre part, en utilisant un autre mode de chauffage, tel qu'un chauffage par infra-rouge, l'ensemble du cordon de collage serait chauffé et les débordements seraient importants.

Pour coller par induction un vitrage sur un cadre en matière plastique, on utilise un cordon de collage qui comporte dans sa zone proche du cadre rigide, un insert en métal ou alliage magnétique ou renferme dans sa composition une charge magnétique permettant un chauffage par induction.

Dans ce cas, le chauffage par induction chauffe l'insert métallique ou la charge magnétique, ce qui ramollit la colle dans la zone à coller et assure le collage sur le cadre en matière plastique.

Le dispositif pour la mise en oeuvre du procédé précité comprend un cadre rigide dont le contour correspondant sensiblement a celui du vitrage à fixer, ce cadre portant à sa périphérie sur sa face adjacente au vitrage, un inducteur haute-fréquence, des moyens étant prévus pour maintenir ledit inducteur à une certaine distance faible de la périphérie du vitrage dans sa position de collage.

Ce dispositif de chauffage par induction haute-fréquence présente toutefois l'inconvénient d'être onéreux, du fait qu'il nécessite un générateur ayant au moins une puissance comprise entre 12 et 30 KW/h sous une fréquence de 10 KHz.

Cette forte puissance résulte du fait que la distance entre le générateur HF et l'inducteur et le châssis en acier sur lequel le vitrage doit être collé est relativement grande (supérieure à 6 mm).

Le coût élevé d'un tel dispositif de chauffage haute-fréquence dissuade les garagistes à faire l'investissement correspondant pour procéder au remplacement des pare-brise ou autres vitrages.

Le but de la présente invention est de remédier à l'inconvénient précité, en proposant un vitrage qui peut être collé sur un châssis rigide au moyen d'un dispositif de chauffage par induction de faible puissance, c'est-à-dire peu onéreux.

Suivant l'invention, le vitrage comportant à sa périphérie un cordon en matière thermofusible apte à permettre sa fixation par collage sur un châssis rigide, par chauffage à induction sous haute-fréquence, est caractérisé en ce que ce vitrage porte en outre un élément inducteur en métal bon conducteur de l'électricité qui s'étend sur toute la périphérie du vitrage, les extrémités de cet élément inducteur présentant des bornes destinées à être raccordées à un générateur de chauffage par haute fréquence.

Du fait que le vitrage porte lui-même à sa périphérie un élément bon conducteur de l'électricité, cet élément se trouve nécessairement à une faible distance du châssis en acier sur lequel repose le cordon en matière thermofusible, lorsque le vitrage est en position de collage.

Il suffit ainsi d'une faible puissance pour chauffer le châssis et obtenir la fusion du cordon thermofusible. A cet effet, il suffit de raccorder le générateur haute-fréquence aux bornes de l'élément inducteur.

Les essais ont montré qu'un générateur haute-fréquence de puissance égale à 2 KW sous une fréquence de l'ordre de 15 à 25 KHz permettait d'obtenir la fusion du cordon en matière thermofusible en moins de 2 minutes.

Du fait qu'un tel générateur présente une faible puissance et qu'il ne nécessite pas de moyens de support ou de gabarit complexe pour maintenir l'inducteur en regard de la périphérie du vitrage, la fixation du vitrage peut être réalisée à faible coût, de sorte que cette opération est à la portée des garagistes désirant remplacer des vitrages tels que des pare-brise.

Selon une version préférée de l'invention, ledit élément inducteur est noyé dans le cordon de collage en matériau thermofusible.

Cette disposition au sein du cordon de collage, permet de définir avec précision la position de l'inducteur par rapport au vitrage et au châssis auquel le vitrage est destiné à être collé.

De plus, grâce à cette position au sein du cordon de collage, l'inducteur est parfaitement isolé électriquement, notamment par rapport au châssis métallique.

Par ailleurs, dans cette position, l'inducteur est très proche du châssis, de sorte que l'induction permet un échauffement très rapide de la zone du châssis adjacente au cordon de collage, avec un générateur haute-fréquence de puissance relativement faible.

En outre, grâce à la disposition de l'inducteur au sein du cordon en matière thermofusible, on obtient un échauffement très uniforme permettant d'obtenir sans ajustements fastidieux et sans risque de débordements de matière fusible, une fusion régulière du cordon sur toute la périphérie du vitrage.

De préférence, l'élément inducteur est un fil ou insert découpé en cuivre. D'autres métaux bons conducteurs de l'électricité peuvent convenir, mais ceux-ci sont généralement plus coûteux que le cuivre.

D'autres particularités et avantages de l'invention apparaîtront encore dans la description ci-après.

Aux dessins annexés donnés à titre d'exemples non limitatifs :

- la figure 1 est une vue en coupe longitudinale partielle d'un pare-brise muni d'un cordon en matière thermofusible en contact avec un châssis rigide sur lequel il est destiné à être collé,

- la figure 2 est une vue analogue à la figure 1, montrant le pare-brise collé sur le châssis,

- la figure 3 est une vue en plan montrant l'inducteur noyé dans le cordon thermofusible et son raccordement à un générateur haute-fréquence,

- la figure 4 est une vue en coupe montrant une variante de réalisation de l'élément inducteur noyé dans le cordon thermofusible,

- la figure 5 est une vue agrandie en coupe d'un élément inducteur,

- la figure 6 est une vue en coupe montrant un autre mode de fixation de l'élément inducteur,

- les figures 7 et 8 montrent d'autres modes de fixation de l'élément inducteur.

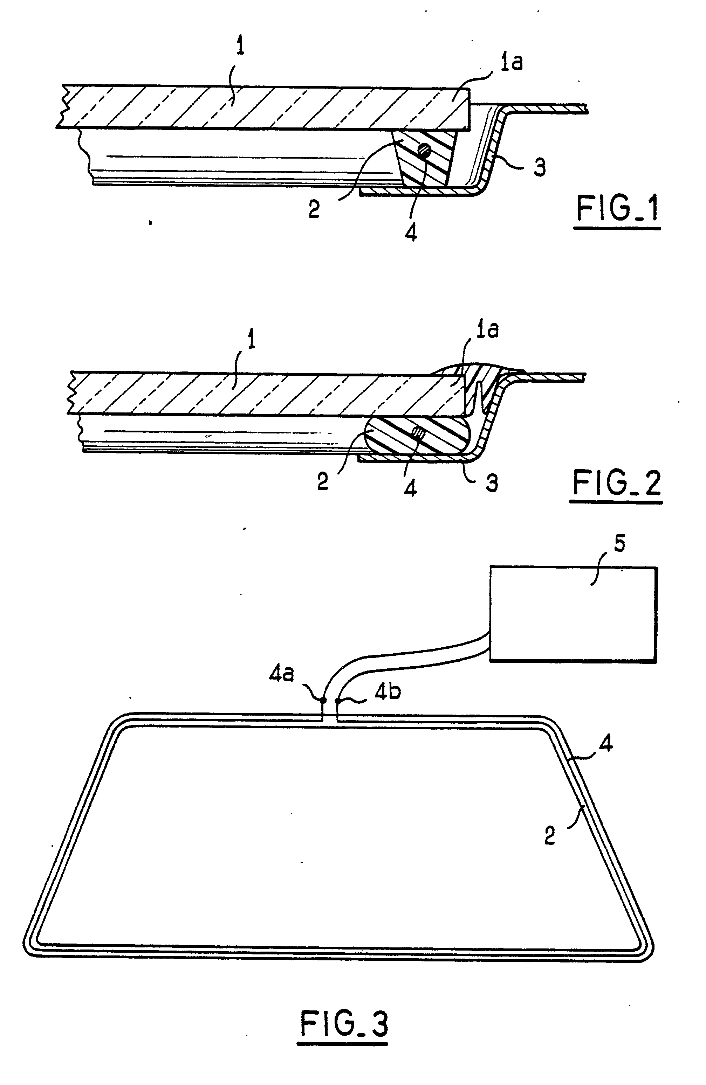

Dans la réalisation de la figure 1, on a représenté un pare-brise 1 comportant à sa périphérie 1a un cordon 2 en matière thermofusible apte à permettre sa fixation par collage sur un châssis rigide 3, par exemple la feuillure de la carrosserie en acier d'une automobile par chauffage par induction haute-fréquence.

Conformément à l'invention, ce pare-brise porte en outre un élément 4 inducteur en métal bon conducteur de l'électricité qui s'étend sur toute la périphérie 1a du pare-brise. Les extrémités de cet élément inducteur 4 présentent (voir figure 3) des bornes 4a, 4b destinées à être raccordées à un générateur de chauffage par haute-fréquence 5.

Dans les exemples représentés sur les figures 1, 2 et 4, l'élément inducteur 4 est noyé dans le cordon 2 de collage en matière thermofusible.

De préférence, cet élément inducteur est en cuivre, sous forme de fil ayant un diamètre de l'ordre de 1 à 2 mm.

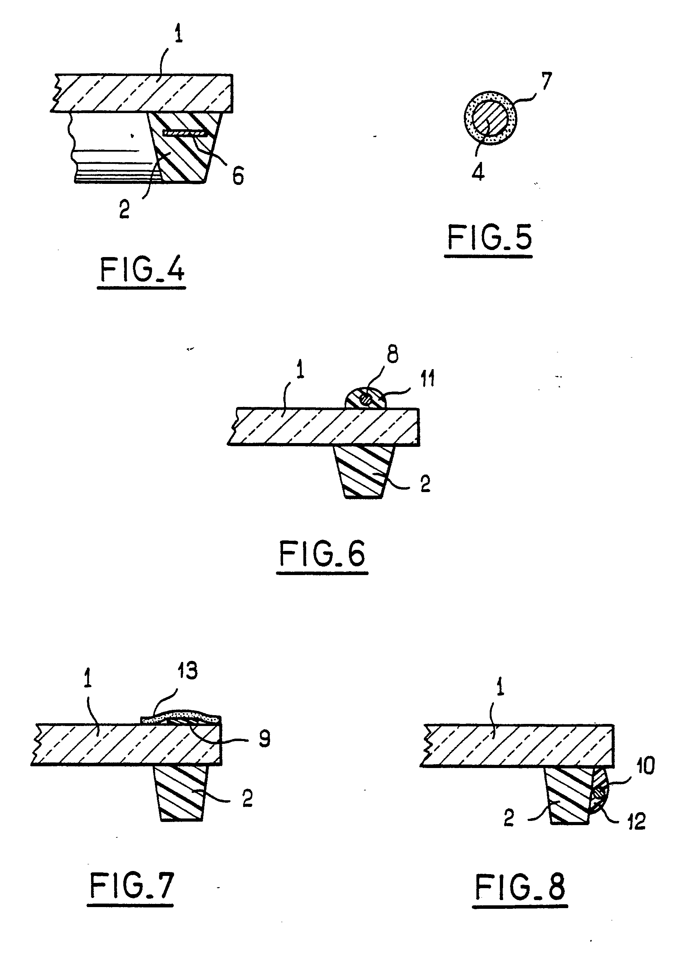

Cet élément inducteur peut également être constitué par un insert 6 (voir figure 4) découpé dans une feuille dudit métal bon conducteur. La réalisation de l'élément inducteur n'est toutefois pas limitée aux formes précitées.

De préférence l'élément inducteur 4 ou 6 est recouvert (voir figure 5) par une couche d'une matière électriquement isolante résistant à la chaleur du chauffage, telle que du fil de cuivre dit émaillé.

De préférence, l'élément inducteur 4, 6 est situé sensiblement au centre du cordon 1.

Théoriquement, il est avantageux que l'élément inducteur 4, 6 soit le plus proche possible du châssis en acier 3, afin de minimiser la puissance nécessaire pour chauffer la zone du châssis 3 proche du cordon 2 afin d'obtenir la fusion de la matière thermofusible.

Toutefois, en rapprochant l'élément inducteur 4, 6 non isolé électriquement du châssis 3, on risque, sous l'effet combiné de la pression appliquée sur le pare-brise 1 et de l'aplatissement du cordon thermofusible 2, d'amener l'élément inducteur 4, 6 en contact avec le châssis 3 et provoquer ainsi un court-circuit.

Ce risque est évité en incorporant l'élément inducteur 4, 6 sensiblement au centre de la section du cordon thermofusible 2. Ce risque est néanmoins supprimé grâce à la couche du produit isolant 7 qui recouvre l'élément inducteur 4.

Le pare-brise 1 est prêt à être fixé par collage sur le châssis 3.

Pour obtenir ce collage, il suffit de brancher aux bornes 4a, 4b de l'élément inducteur 4, qui font saillie hors du cordon de collage 2, un générateur à haute-fréquence.

Du fait de la position optimale de l'élément inducteur au sein du cordon de collage 2 et de sa position rapprochée du châssis 3, un générateur haute fréquence de puissance égale à 2 KW sous une fréquence de 15 à 25 KHz suffit pour réaliser l'opération.

Le fait d'incorporer un fil ou insert de cuivre dans le cordon de collage 2 a peu d'incidence sur le coût de fabrication du pare-brise et permet à un réparateur de procéder à des remplacements de pare-brise sans avoir à supporter un investissement excessif.

La matière thermofusible pouvant être utilisée pour réaliser le cordon 2 peut correspondre à celles décrites dans les brevets cités dans l'introduction de la présente description.

Bien entendu, l'invention n'est pas limitée aux exemples de réalisation que l'on vient de décrire et on peut apporter à ceux-ci de nombreuses modifications sans sortir du cadre de l'invention.

Ainsi, les figures 6, 7 et 8 représentent des variantes qui entrent dans le cadre de l'invention.

Ainsi, sur les figures 6, 7, 8, l'élément inducteur 8, 9, 10 est fixé au vitrage 1 à proximité du cordon de collage 2, et non pas noyé dans celui-ci.

Dans le cas des figures 6 et 8, l'élément inducteur 8, 10 est noyé dans un autre cordon 11, 12 de matière adhésive appliqué sur la face extérieure ou intérieure du vitrage 1 à proximité du cordon de collage 2.

Dans le cas de la figure 7, l'élément inducteur 9 est fixé au vitrage par une bande adhésive 13.

Dans les réalisations des figures 6 à 8, les éléments conducteurs 8, 9, 10 pourraient être fixés au pare-brise uniquement pour leur remplacement chez un garagiste, étant entendu que les pare-brise démunis d'élément inducteur pourraient être montés en usine sur les chaînes de fabrication à l'aide du dispositif décrit dans la demande de brevet français 88 17061 du 23/12/1988 des demanderesses.

Bien entendu, l'invention s'applique à la pose de tous autres vitrages que les pare-brise.

## Revendications

1. Vitrage (1) comportant à sa périphérie un cordon (2) en matière thermofusible apte à permettre sa fixation par collage sur un châssis rigide (3), par chauffage par induction haute-fréquence, caractérisé en ce que ce vitrage (1) porte en outre un élément inducteur (4, 6, 8, 9, 10) en métal bon conducteur de l'électricité qui s'étend sur toute la périphérie (1a) du vitrage, les extrémités de cet élément inducteur présentant des bornes (4a, 4b) destinées à être raccordées à un générateur (5) de chauffage par haute-fréquence.

2. Vitrage conforme à la revendication 1, caractérisé en ce que ledit élément inducteur (4, 6) est noyé dans le cordon (2) de collage en matériau thermofusible.

3. Vitrage conforme à la revendication 1, caractérisé en ce que ledit élément inducteur est en cuivre.

4. Vitrage conforme à l'une des revendications 2 ou 3, caractérisé en ce que ledit élément inducteur est un fil (4).

5. Vitrage conforme à l'une des revendications 2 ou 3, caractérisé en ce que ledit élément inducteur est un insert (6) découpé dans une feuille dudit métal bon conducteur.

6. Vitrage conforme à l'une des revendications 2 à 5, caractérisé en ce que ledit élément conducteur (4) est recouvert par une couche (7) d'une matière électriquement isolante résistant à la chaleur du chauffage.

7. Vitrage conforme à la revendication 6, caractérisé en ce que ladite matière est de l'émail.

8. Vitrage conforme à l'une des revendications 2 à 7, caractérisé en ce que ledit élément inducteur (4, 6) est situé sensiblement au centre du cordon (2)

9. Vitrage conforme à la revendication 1, caractérisé en ce que l'élément inducteur (8, 9, 10) est fixé au vitrage (1) à proximité du cordon de collage (21

10. Vitrage conforme à la revendication 9, caractérisé en ce que l'élément inducteur (8, 10) est noyé dans un autre cordon (11, 12) de matière adhésive fixé au vitrage (1) à proximité du cordon de collage (2).

11. Vitrage conforme à la revendication 9, caractérisé en ce que l'élément inducteur (9) est fixé au vitrage par une bande adhésive (13).

12. Procédé de remplacement d'un vitrage conforme à l'une des revendications 9 à 11, caractérisé en ce que l'on fixe l'élément inducteur (8, 9, 10) au vitrage au moment du remplacement.

FIG_1

FIG_2

FIG_3

FIG.4

FIG.5

FIG.6

FIG.7

FIG.8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | FR-A-2508267 (SAINT-GOBAIN VITRAGE) <br> * revendications 1, 2; figure 2 * | 1, 9 | B60J10/02 |
| A | WO-A-8809712 (TEROSON) <br> * revendication 1 * | 1 | |
| A | FR-A-2088158 (ETABLISSEMENTS MESNEL) <br> * figures 2, 3 * | 4 | |
| A | FR-A-2610618 (BOUSSOIS ET AL.) <br> * figure 4 * | 10 | |
| A | DE-A-3501490 (DAIMLER-BENZ) <br> * page 4, lignes 12 - 24; figure * | 12 | |
| D,A | FR-A-2608669 (BOUSSOIS) <br> * figures 1, 2 * | 5 | |

DOMAINES TECHNIQUES RECHERCHES (Int. Cl.5 )

B60J

Le présent rapport a été établi pour toutes les revendications

| Lieu de la recherche | Date d'achèvement de la recherche | Examinateur |
|---|---|---|
| BERLIN | 18 JUILLET 1990 | BECKER W.D.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                    
& : membre de la même famille, document correspondant

EPO FORM 1503 03.82 (P0402)